# EUROPÄISCHE PATENTSCHRIFT

(11) **EP 1 363 008 B1**
(45) Veröffentlichungstag und Bekanntmachung des Hinweises auf die Patenterteilung: **10.01.2007**
(21) Anmeldenummer: 03010452.5
(22) Anmeldetag: 09.05.2003
(51) Int. Cl.: F02D 41/30, F02D 41/14, F02D 41/18, F02D 41/38

(54) **Verfahren und Vorrichtung zur Steuerung der einzuspritzenden Kraftstoffmenge einer selbstzündenden Brennkraftmaschine**
Method and apparatus to control the fuel injection amount of an auto-ignition engine
Procédé et dispositif de contrôle d'injection du carburant pour un moteur à auto-allumage

(30) Priorität: 14.05.2002 DE 10221377; 09.04.2003 DE 10316185
(43) Veröffentlichungstag der Anmeldung: 19.11.2003
(73) Patentinhaber: ROBERT BOSCH GMBH, 70442 Stuttgart (DE)
(72) Erfinder: Bleile, Thomas, 70435 Stuttgart (DE); Scheidt, Michael, 70376 Stuttgart (DE); Kraus, Benedikt, 70806 Kornwestheim (DE); Rupp, Andreas, 71672 Marbach (DE); Zieher, Rene, 68309 Mannheim (DE)

(56) Entgegenhaltungen:
- EP-A- 0 757 168
- DE-A- 3 925 877
- DE-A- 4 322 319
- DE-A- 10 017 280
- DE-A- 10 146 317

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Es sind Verfahren und Vorrichtung zur Steuerung einer Brennkraftmaschine, insbesondere einer selbstzündenden Brennkraftmaschine, bekannt, bei denen ausgehend von Betriebskenngrößen ein Begrenzungswert vorgegeben wird, auf den eine die einzuspritzende Kraftstoffmenge charakterisierende Größe begrenzt wird. Dieser Begrenzungswert wird im folgenden auch als höchstzulässige Kraftstoffmenge bezeichnet. Diese höchstzulässige Kraftstoffmenge wird beispielsweise abhängig von der zugeführten Frischluftmasse, die beispielsweise gemessen wird, derart bestimmt, dass keine unzulässigen Rauchemissionen auftreten. Die Größe, die die einzuspritzende Kraftstoffmenge charakterisiert, wird dann so gewählt, dass abhängig vom Betriebszustand dieser Begrenzungswert nicht überschritten wird. Dadurch können insbesondere beim Volllastbeschleunigen Rußentwicklungen vermieden werden. Üblicherweise wird die Kraftstoffmenge auf eine höchstzulässige Kraftstoffmenge begrenzt. Es kann auch vorgesehen sein, dass eine Momentengröße auf ein höchstzulässiges Moment begrenzt wird.

Aus der DE 39 25 877 ist ein Verfahren und eine Vorrichtung zur Steuerung einer Brennkraftmaschine bekannt. Ausgehend von verschiedenen Betriebskenngrößen wird ein Begrenzungswert, auf den die einzuspritzende Kraftstoffmenge begrenzt wird, vorgegeben. Ausgehend von dem Vergleich eines Sollwertes für eine Sauerstoff größe und einem Istwert für die Sauerstoffgröße, wird ein Korrekturwert für den Begrenzungswert ermittelt. Als Eingangsgröße zur Bildung des Begrenzungswert dient ein Messwert für die Luftmenge.

Bei Beschleunigung im instationären Volllastbereich erfährt der Ladedruck eine starke zeitliche Änderung, wodurch aufgrund des Speichereffektes im Ansaugtrakt das Signal des Luftmassenmessers nicht mehr der dem Motor zugeführten Luftmasse entspricht. Eine Begrenzung der einzuspritzenden Kraftstoffmenge, ausgehend von dem Luftmassensignal eines entsprechenden Sensors, weist somit bei Ladedruckänderungen einen systematischen Fehler auf. Dies hat zur Folge, dass entweder in manchen Beschleunigungszuständen eine entsprechende Rußemission auftritt oder dass es zu Dynamikeinbußen kommt, aufgrund derer entsprechende Beschleunigungen nicht mehr möglich sind. Neben diesem systematischen Fehler führen Streuungen im Einspritzsystem und im Bereich der Messung der Luftmasse zu ungewollten Emissionen bzw. zu Leistungseinbußen.

Dadurch, dass der Sollwert für die Sauerstoffgröße ausgehend von einem Luftmengenwert und dem Begrenzungswert vorgegeben wird, können die Emissionen deutlich verbessert werden ohne dass das dynamische Verhalten beeinträchtigt wird, wobei eine einfache und genauer Vorgabe des Sollwerts möglich ist. Als Sauerstoffgröße wird bevorzugt ein Signal verwendet, das die Konzentration des Sauerstoffs im Abgas der Brennkraftmaschine charakterisiert. Ein entsprechendes Signal kann beispielsweise mittels einer Lambdasonde gemessen werden.

Besonders vorteilhaft ist es, wenn der Luftmengenwert mittels eines Modells und/oder eines Kennfeldes bestimmt wird oder mittels eines Sensors erfasst wird. Als Eingangsgrö-ßen für das Modell und/oder das Kennfeld werden bevorzugt Größen verwendetet, die den Ladedruck, die Ladelufttemperatur und/oder die Drehzahl charakterisieren.

Eine weitere Steigerung der Genauigkeit des Verfahrens ergibt sich, wenn dem Modell und/oder dem Kennfeld als Eingangsgrößen ferner Größen zugeführt werden, die den Atmosphärendruck und/oder die Abgasrückführrate charakterisieren.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD

### Zeichnung

Die Erfindung wird nachstehend anhand der in der Zeichnung dargestellten Ausführungsformen erläutert. Figur 1 zeigt ein Blockdiagramm der erfindungsgemäßen Vorrichtung, die Figur 2 ein detaillierte Darstellung der Vorgehensweise und Figur 3 ein Blockdiagramm der Rauchbegrenzung.

Im folgenden wird die Vorgehensweise am Beispiel der Kraftstoffmenge beschreiben. Sie kann auch bei anderen Größen, die die Kraftstoffmengen charakterisieren, insbesondere des Moments bei einer direkteinspritzenden Brennkraftmaschine und /oder der Ansteuerdauer eines Mengenbestimmenden Stellelements, verwendet werden.

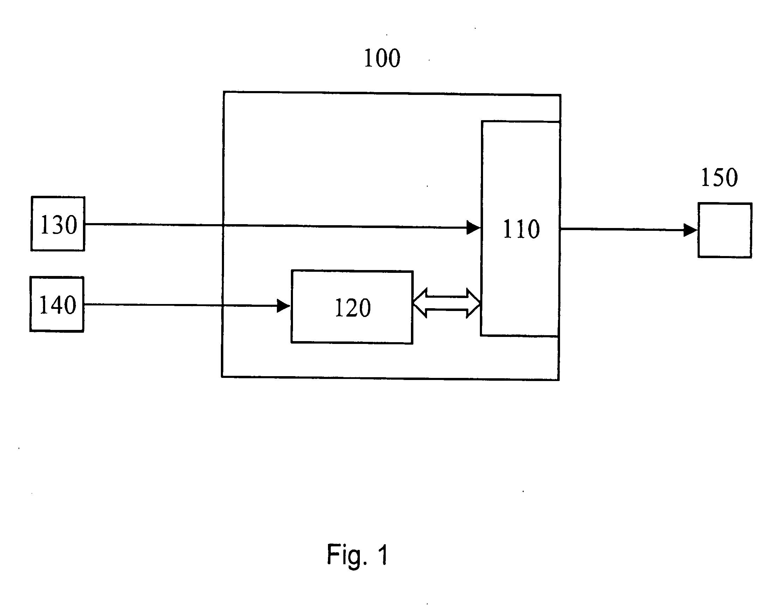

In Figur 1 sind die wesentlichen Elemente einer Vorrichtung zur Steuerung einer Brennkraftmaschine als Blockdiagramm dargestellt. Ein Steuergerät ist mit 100 bezeichnet. Dieses umfasst unter anderem eine Stellgrößenvorgabe 110 und ein Modell 120. Dem Steuergerät 100 werden die Ausgangssignale erster Sensoren 130 und zweiter Sensoren 140 zugeführt. Die ersten Sensoren beaufschlagen im wesentlichen die Stellgrößenvorgabe 110 und die zweiten Sensoren im wesentlichen das Modell 120 mit Signalen. Die Darstellung ist dabei lediglich beispielhaft, da verschiedene Sensoren sowohl die Stellgrößenvorgabe 110 als auch das Modell 120 mit Signalen beaufschlagen können.

Die Stellgrößenvorgabe beaufschlagt wenigstens ein Stellelement 150 mit Ansteuersignalen. Das wenigstens eine Stellelement 150 bestimmt die einzuspritzende Kraftstoffmenge, den Zeitpunkt und/oder das Ende der Kraftstoffzumessung. Des weiteren können weitere Stellelemente vorgesehen sein, die beispielsweise die Abgasrückführrate bzw. andere Betriebskenngrößen beeinflussen können.

Das Modell 120 tauscht mit der Stellgrößenvorgabe 110 verschiedene Signale aus. Ausgehend von den Sensorsignalen, die verschiedene Betriebskenngrößen charakterisieren, berechnet die Stellgrößenvorgabe 110 eine einzuspritzende Kraftstoffmenge QK. Des weiteren gibt die Stellgrößenvorgabe 110 eine höchstzulässige Kraftstoffmenge QKM, abhängig von den Betriebskenngrößen, vor. Die einzuspritzende Kraftstoffmenge QK wird dann auf diese höchstzulässige Kraftstoffmenge begrenzt. Ausgehend von dieser begrenzten Kraftstoffmenge werden dann die Ansteuersignale zur Beaufschlagung des Stellelements 150 bzw. der Stellelemente 150 vorgegeben.

Verschiedene Größen werden von dem Modell 120 ausgehend von Betriebskenngrößen oder intern in der Stellgrößenvorgabe 110 vorliegenden Signalen mittels eines oder mehreren Modellen berechnet. Ein solches Modell ist beispielsweise aus der DE 100 17 280 bekannt. Die berechneten Größen werden von der Stellgrößenvorgabe 110 bei der Vorgabe der Ansteuersignale, der einzuspritzenden Kraftstoffmenge und/oder der höchstzulässigen Kraftstoffmenge berücksichtigt.

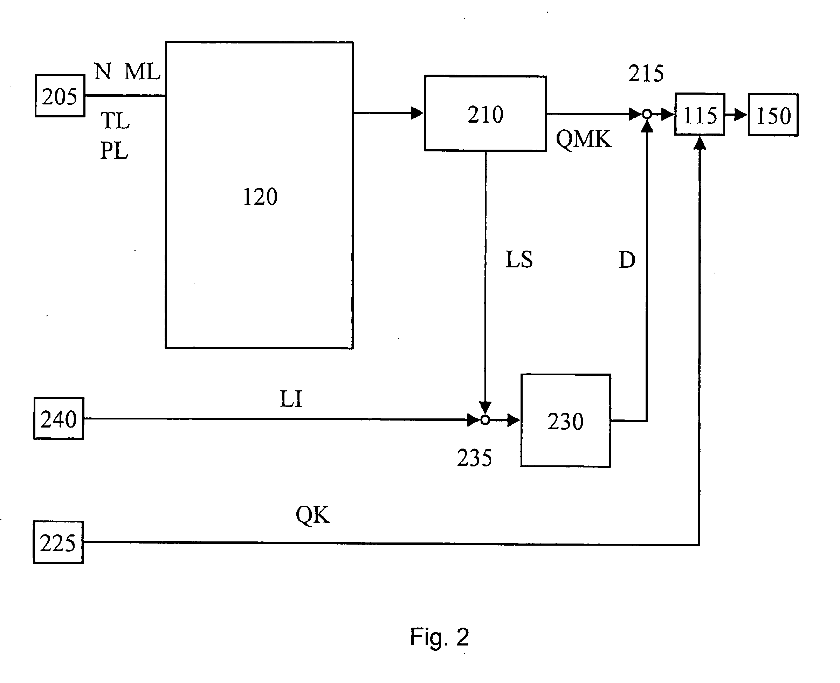

In Figur 2 ist eine erste Ausführungsform der erfindungsgemäßen Vorgehensweise dargestellt. Bereits in Figur 1 beschriebene Elemente sind mit entsprechenden Bezugszeichen bezeichnet. Eine erste Signalvorgabe 205 beaufschlagt das Modell des Luftsystems 120 mit diversen Signalen wie beispielsweise einem Signal N, das die Drehzahl der Brennkraftmaschine charakterisiert, einem Signal PL und einem Signal TL, das den Ladedruck bzw. die Ladelufttemperatur charakterisiert und einem Signal ML, das die Luftmenge charakterisiert, die der Brennkraftmaschine zugeführt wird. Diese Signale, insbesondere das Signal ML, das die Luftmenge charakterisiert, werden von Sensoren bereitgestellt. Alternativ können diese Größen auch intern im Steuergerät 100 vorliegen und zur Steuerung anderer Betriebsgrößen verwendet werden.

Das Modell des Luftsystems beaufschlagt eine Rauchbegrenzung 210 mit einem Signal, das den Frischluftmassenstrom in den Motor charakterisiert. Die Rauchbegrenzung 210 gibt ein Signal QKM vor, das der höchstzulässigen Kraftstoffmenge entspricht. Mit diesem Signal wird über einen Verknüpfungspunkt 215 eine Minimalauswahl 115 beaufschlagt, an dem zweitem Eingang der Minimalsauswahl 115 liegt das Ausgangssignal einer zweiten Signalvorgabe 225 an. Bei diesem Ausgangssignal QK handelt es sich um ein Signal, das die einzuspritzende Kraftstoffmenge charakterisiert. Mit dem Ausgangssignal der Minimalauswahl 115 wird dann das Mengenstellwerk 150 beaufschlagt.

Ausgehend von verschiedenen Eingangsgrößen, die beispielsweise die Drehzahl N, die Ladelufttemperatur TL, den Ladeluftdruck PL und/oder die der Brennkraftmaschine zugeführte Luftmenge ML charakterisieren, berechnet das Modell 120 eine Größe, die den Frischluftmassenstrom in die Brennkraftmaschine und die Sauerstoffmasse, die der Brennkraftmaschine zugeführt wird charakterisiert. Ausgehend von dieser Größe bestimmt dann die Rauchbegrenzung 210 die höchstzulässige Kraftstoffmenge QKM, die möglich ist, ohne dass unzulässige Rauchemissionen auftreten. Die Minimalauswahl 115 begrenzt die einzuspritzende Kraftstoffmenge QK, die von der zweiten Signalvorgabe bereitgestellt wird, auf diesen höchstzulässigen Wert und beaufschlagt mit diesem begrenzten Wert den Mengensteller 150.

Bei der zweiten Signalvorgabe handelt es sich bevorzugt um ein Teil der Stellgrößenvorgabe 110 des Steuergeräts. In der Regel sind auch die Rauchbegrenzung 210 und die Minimalauswahl 115 in die Stellgrößenvorgabe 110 integriert.

Erfindungsgemäß bildet das physikalische Modell 120 des Luftsystems die Speichereffekte im Ansaugvolumen zwischen dem Sensor, der das Signal bezüglich der Frischluftmenge ML ermittelt und dem Motoreinlass nach. Durch diese Berechnung ist eine genaue Berechnung des Frischluftmassenstroms auch in dynamischen Zuständen, beispielsweise bei Änderungen des Ladedrucks, möglich. Dieses dynamisch korrigierte Signal des Luftmassenmessers wird in der Rauchbegrenzung 210 zur Ermittlung der maximal zulässigen Kraftstoffmasse verwendet.

Ferner ist ein Regler 230 vorgesehen ist, der den Verknüpfungspunkt 21 5 mit einem Ausgangssignal D beaufschlagt. Dem Regler 230 wird das Ausgangssignal eines Verknüpfungspunktes 235 zugeführt, der ein Signal LS der Rauchbegrenzung 210 und ein Signal LI eines Lambda-Sensors 240 verarbeitet.

Erfindungsgemäß ist vorgesehen, dass der Regler 230 das Ausgangssignal eines Lambda-Sensors, der ein Signal LI bereitstellt, das die Sauerstoffkonzentration im Abgas charakterisiert, mit einem entsprechenden Sollwert LS vergleicht und ausgehend von diesem Vergleichsergebnis einen Wert D zur Korrektur des höchstzulässigen Kraftstoffmengenwerts QKM vorgibt.

Dabei gibt die Rauchbegrenzung 210 neben dem höchstzulässigen Kraftstoffmengenwert QKM einen Sollwert LS für die Sauerstoffkonzentration im Abgas vor, auf den der Regler 230 die gemessene Lambda-Konzentration LI dadurch einregelt, dass sie das Ausgangssignal QKM der Rauchbegrenzung mit dem Wert D korrigiert.

Dies bedeutet, der Regler 230 vergleicht den tatsächlichen Lambda-Wert im Abgas mit dem in der Rauchbegrenzung 210 festgelegten Wert. Durch Toleranzen im Einspritzsystem oder bei der Erfassung der Luftmenge kommt es zu Abweichungen zwischen dem Soll- und Istwert für das Lambda-Signal. Durch einen geeigneten Eingriff über das Signal D in die maximal zulässige Einspritzmenge wird diese Abweichung ausgeregelt.

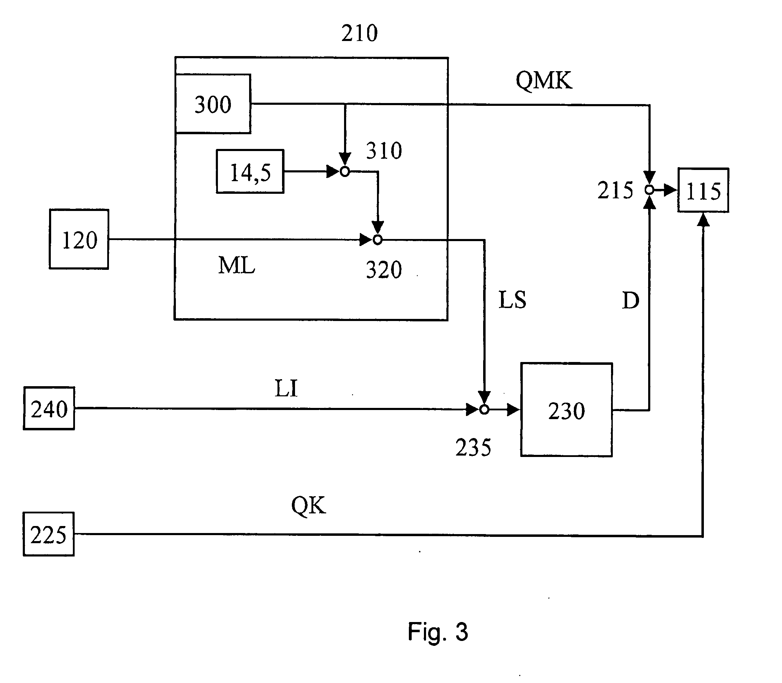

In Figur 3 ist der Block Rauchbegrenzung 210 detaillierter dargestellt. Bereits in Figur 1 und Figur 2 dargestellte und beschriebene Elemente sind in Figur 3 mit entsprechenden Bezugszeichen bezeichnet. Eine Grenzwertvorgabe ist mit 300 bezeichnet. Diese bestimmt ausgehend von nicht dargestellten Eingangsgrößen die höchstzulässige Kraftstoffmenge QMK. Diese höchstzulässige Kraftstoffmenge QMK gelangt zum einen zum Verknüpfungspunktes 215 und zum anderen zu einem Verknüpfungspunkt 310. Am zweiten Eingang des Verknüpfungspunktes 310 liegt das Ausgangssignal einer Konstantwertvorgabe 315 an. Diese Konstantwertvorgabe gibt den Wert von annähernd 14,5 vor. Mit dem Ausgangssignal des Verknüpfungspunktes 310 wird ein Verknüpfungspunkt 320 beaufschlagt, an dessen zweiten Eingang das Ausgangssignal ML des Modells 120 anliegt. Das Ausgangssignal LS des Verknüpfungspunktes 320 gelangt zu dem Verknüpfungspunkt 235.

Die Grenzwertvorgabe 300 ermittelt vorzugsweise ausgehend von verschiedenen Betriebsgrößengrößen wie beispielsweise der Drehzahl der Brennkraftmaschine die höchstzulässige Kraftstoffmenge QMK. Ausgehend von dieser höchstzulässigen Kraftstoffmenge, dem Ausgangssignal ML des Modells 120 und dem Ausgangssignal der Konstantwertvorgabe 315 ergibt sich am Ausgang des Verknüpfungspunktes 320 der Sollwert LS für das Lambdasignal.

Bei dem Ausgangssignal ML des Modells 120 handelt es sich um die Luftmenge, die der Brennkraftmaschine zugeführt wird. Bei der dargestellten Ausführungsform wird diese mittels des Modells 21 ausgehend von verschiedenen Größen berechnet. Als Eingangsgrößen des Modells wird bevorzugt das Ausgangssignal eines Ladedrucksensors, eines Ladelufttemperatursensors sowie eines Luftmassensensors verwendet. Das heißt es werden der Ladedruck, die Ladelufttemperatur und die Luftmasse verwendet. Der Luftmassensensor erfasst die Luftmasse vor der Brennkraftmaschine. Ist die Brennkraftmaschine mit einem Verdichter ausgestattet, so ist der Luftmassensensor vor dem Verdichter angeordnet. Als weitere Größe kann ein Signal verwendet werden, das den Anteil an rückgeführten Abgasen charakterisiert. Ferner kann ein Signal, das den Atmosphärendruck charakterisiert berücksichtigt werden.

Das Modell 120 kann dabei als Rechenverfahren beispielsweise als pTn-Verfahren ausgebildet sein. Bei einem solchen Verfahren wird ausgehend von dem Druck p, der Temperatur T der Luft, die in die Brennkraftmaschine strömt, und der Drehzahl n der Brennkraftmaschine der Massenstrom, der in die Brennkraftmaschine strömt, berechnet.

Ferner kann das Modell 120 als Kennfeldstruktur ausgebildet sein. Das heißt der Zusammenhang zwischen der Luftmassen ML und den Eingangsgrößen ist in Form eines oder mehreren Kennfeldern abgelegt.

In einer besonders einfachen Ausgestaltung wird an Stelle des Modells 120 ein Sensor verwendet, der ein Signal bereitstellt, das der Luftmassen entspricht. Das heißt es wird unmittelbar das Ausgangssignal eines Luftmassenmessers verwendet.

In den Ausführungsbeispielen wurde die Vorgehensweise anhand der Kraftstoffmenge beschrieben. Anstelle der Kraftstoffmenge werden häufig Momentengrößen zu Steuerung der Brennkraftmaschine verwendet. Besonders vorteilhaft ist es deshalb anstelle der Kraftstoffmenge Momentengrößen zu verwenden. Insbesondere wird die höchstzulässige Kraftstoffmenge durch ein höchstzulässiges Moment und die Kraftstoffmenge QK durch ein Wunschmoment ersetzt.

## Patentansprüche

1. Verfahren zur Steuerung einer Brennkraftmaschine, insbesondere einer selbstzündenden Brennkraftmaschine, wobei ausgehend von Betriebskenngrößen einen Begrenzungswert vorgebbar ist, auf den eine die einzuspritzende Kraftstoffmenge charakterisierende Größe begrenzt wird, wobei ausgehend von dem Vergleich eines Sollwerts für eine Sauerstoffgröße und einem Istwert für die Sauerstoffgröße ein Korrekturwert für den Begrenzungswert vorgebbar ist, **dadurch gekennzeichnet, dass** der Sollwert für die Sauerstoffgröße ausgehend von einem Luftmengenwert und dem Begrenzungswert vorgebbar ist.

2. Verfahren nach Anspruch 1, **dadurch gekennzeichnet, dass** der Luftmengenwert mittels eines Modells und/oder eines Kennfeldes bestimmt wird oder mittels eines Sensors erfasst wird.

3. Verfahren nach Anspruch 2, **dadurch gekennzeichnet, dass** dem Modell und/oder dem Kennfeld als Eingangsgrößen wenigstens ein Ladedruck, eine Ladelufttemperatur und/oder eine Luftmasse, insbesondere eine gemessene Luftmasse vor dem Verdichter, zugeführt wird.

4. Verfahren nach einem der Ansprüche 2 oder 3, **dadurch gekennzeichnet, dass** dem Modell und/oder dem Kennfeld als Eingangsgrößen ferner Atmosphärendruck und/oder die Abgasrückführrate zugeführt wird.

5. Verfahren nach einem der vorherigen Ansprüche, **dadurch gekennzeichnet, dass** eine Momentengröße als eine die einzuspritzende Kraftstoffmenge charakterisierende Größe verwendet wird.

6. Vorrichtung zur Steuerung einer Brennkraftmaschine, insbesondere einer selbstzündenden Brennkraftmaschine, wobei ausgehend von Betriebskenngrößen einen Begrenzungswert vorgebbar ist, auf den eine die einzuspritzende Kraftstoffmenge charakterisierende Größe begrenzt wird, mit Mitteln, die ausgehend von dem Vergleich eines Sollwerts für die Sauerstoffgröße und einem Istwert für die Sauerstoffgröße ein Korrekturwert für den Begrenzungswert vorgeben, **dadurch gekennzeichnet, dass** Mittel vorgesehen sind die den Sollwert für die Sauerstoffgröße ausgehend von einem Luftmengenwert und dem Begrenzungswert vorgeben.

7. Computerprogramm mit Programmcode-Mitteln, um alle Schritte von jedem beliebigen der Ansprüche 1 bis 5 durchzuführen, wenn das Programm auf einem Steuergerät für eine Brennkraftmaschine ausgeführt wird.

8. Computerprogrammprodukt mit Programmcode-Mitteln, die auf einem computerlesbaren Datenträger gespeichert sind, um das Verfahren nach jedem beliebigen der Ansprüche 1 bis 5 durchzuführen, wenn das Programmprodukt auf einem Steuergerät für eine Brennkraftmaschine ausgeführt wird.

9. Digitales Speichermedium, insbesondere Diskette, mit elektronisch auslesbaren Steuersignalen, die so mit einem programmierbaren Steuergerät für eine Bremkraftmaschine zusammenwirken können, dass ein Verfahren nach einem der Ansprüche 1 bis 5 ausgeführt wird.

## Claims

1. Method for controlling an internal combustion engine, in particular an auto-ignition internal combustion engine, it being possible to predefine, on the basis of operational characteristic variables, a limiting value to which a variable which characterizes the fuel quantity to be injected is limited, and it being possible to predefine a correction value for the limiting value on the basis of the comparison of a setpoint value for an oxygen variable and an actual value for the oxygen variable, **characterized in that** the setpoint value for the oxygen variable can be predefined on the basis of an air quantity value and the limiting value.

2. Method according to Claim 1, **characterized in that** the air quantity value is determined by means of a model and/or a characteristic diagram or by means of a sensor.

3. Method according to Claim 2, **characterized in that** at least one charge pressure, one charge air temperature and/or one air mass, in particular a measured air mass upstream of the compressor, are fed to the model and/or the characteristic diagram as input variables.

4. Method according to one of Claims 2 or 3, **characterized in that** in addition atmospheric pressure and/or the exhaust gas recirculation rate are fed to the model and/or the characteristic diagram as input variables.

5. Method according to one of the preceding claims, **characterized in that** a torque variable is used as a variable which characterizes the fuel quantity to be injected.

6. Device for controlling an internal combustion engine, in particular an auto-ignition internal combustion engine, it being possible, on the basis of operational characteristic variables, to predefine a limiting value to which a variable which characterizes the fuel quantity to be injected is limited, having means which predefine a correction value for the limiting value on the basis of the comparison of a setpoint value for the oxygen variable and an actual value for the oxygen variable, **characterized in that** means are provided which predefine the setpoint value for the oxygen variable on the basis of an air quantity value and the limiting value.

7. Computer programme having programme code means for carrying out all the steps of any of Claims 1 to 5, when the programme is carried out on a control unit for an internal combustion engine.

8. Computer programme product having programme code means which are stored on a computer-readable data carrier for carrying out the method according to any of Claims 1 to 5 when the programme product is carried out on a control unit for an internal combustion engine.

9. Digital memory medium, in particular diskette, having control signals which can be read out electronically and which can interact with a programmable control unit for an internal combustion engine in such a way that a method according to one of Claims 1 to 5 is carried out.

## Revendications

1. Procédé de commande d'un moteur à combustion interne, et en particulier d'un moteur à combustion interne à auto-allumage,
selon lequel, à partir de grandeurs caractéristiques de fonctionnement, il est possible de prédéfinir une valeur de limitation d'une grandeur caractérisant la quantité de carburant à injecter, et à partir de la comparaison d'une valeur de consigne de la quantité d'oxygène et d'une valeur réelle de cette quantité, une valeur de correction de la valeur de limitation est prédéfinie,
**caractérisé en ce que**
la valeur de consigne de la quantité d'oxygène est prédéfinie à partir d'une valeur de quantité d'air et de la valeur de limitation.

2. Procédé selon la revendication 1,
**caractérisée en ce que**
la valeur de quantité d'air est déterminée au moyen d'un modèle et/ou d'un champ caractéristique ou saisie au moyen d'un détecteur.

3. Procédé selon la revendication 2,
**caractérisée en ce qu'**
au modèle et/ou au champ caractéristique sont amenées, en tant que grandeurs d'entrée, au moins une pression d'admission, une température d'air de suralimentation et/ou une masse d'air, en particulier une masse d'air mesurée à l'avant du compresseur.

4. Procédé selon l'une des revendications 2 ou 3,
**caractérisée en ce qu'**
au modèle et/ou au champ caractéristique sont amenées par ailleurs, en tant que grandeurs d'entrée, la pression atmosphérique et/ou la vitesse de retour du gaz d'échappement.

5. Procédé selon l'une des revendications précédentes,
**caractérisée en ce qu'**
une grandeur de moments est utilisée comme grandeur caractérisant la quantité de carburant à injecter.

6. Dispositif de commande d'un moteur à combustion interne, et en particulier d'un moteur à combustion interne à autoallumage,
selon lequel, à partir de grandeurs caractéristiques de fonctionnement, il est possible de prédéfinir une valeur de limitation d'une grandeur caractérisant la quantité de carburant à injecter, et des moyens à partir de la comparaison d'une valeur de consigne de la quantité d'oxygène et d'une valeur réelle de cette quantité, prédéfinissent une valeur de correction pour la valeur de limitation,
**caractérisé en ce que**
des moyens prédéfinissent la valeur de consigne pour la quantité d'oxygène à partir d'une valeur de quantité d'air et de la valeur de limitation.

7. Programme d'ordinateur comportant des moyens de code de programme afin d'exécuter toutes les opérations de n'importe laquelle des revendications 1 à 5 lorsque le programme est réalisé sur un appareil de commande pour un moteur à combustion interne.

8. Produit de programme d'ordinateur comportant des moyens de code de programme stockés sur un support de données lisible par ordinateur afin d'exécuter le procédé suivant n'importe laquelle des revendications 1 à 5 lorsque le produit de programme est réalisé sur un appareil de commande pour un moteur à combustion interne.

9. Milieu de stockage numérique, en particulier disquette, comportant des signaux de commande pouvant être extraits par voie électronique et qui peuvent coopérer avec un appareil de commande programmable pour un moteur à combustion interne de telle manière qu'un procédé selon l'une des revendications 1 à 5 soit réalisé.
